# EUROPEAN PATENT SPECIFICATION

(11) **EP 2 862 252 B1**
(45) Date of publication and mention of the grant of the patent: **01.03.2017**
(21) Application number: 12735827.3
(22) Date of filing: 05.07.2012
(51) Int. Cl.: H02H 3/253, H02H 7/28, G01R 29/00, H02H 3/04

(54) **A POWER BAY PROTECTION DEVICE AND A METHOD FOR PROTECTING POWER BAYS**
STROMSTATIONSSCHUTZVORRICHTUNG UND VERFAHREN ZUM SCHÜTZEN VON STROMSTATIONEN
DISPOSITIF DE PROTECTION D'ARMOIRE ÉLECTRIQUE, ET PROCÉDÉ DE PROTECTION D'ARMOIRES ÉLECTRIQUES

(43) Date of publication of application: 22.04.2015
(73) Proprietor: Siemens Aktiengesellschaft, 80333 München (DE)
(72) Inventor: R, Vijayaganesh, Agara Bangalore 560017 (IN)
(74) Representative: Patentanwaltskanzlei WILHELM & BECK
(86) International application number: PCT/EP2012/063111
(87) International publication number: WO 2014/005635

(56) References cited:
- WO-A1-2006/124743
- ASSEF Y ET AL: "Artificial neural networks for single phase fault detection in resonant grounded power distribution systems", TRANSMISSION AND DISTRIBUTION CONFERENCE, 1996. PROCEEDINGS., 1996 IEE E LOS ANGELES, CA, USA 15-20 SEPT. 1996, NEW YORK, NY, USA,IEEE, US, 15 September 1996 (1996-09-15), pages 566-572, XP010195313, DOI: 10.1109/TDC.1996.547573 ISBN: 978-0-7803-3522-6

## Description

The invention relates to protecting power bays. The invention specifically relates to managing impedance protection within power bays of a power bay system.

Impedance protection often referred to as distance protection is used to protect the transmission line or the feeder in a substation. Such distance protection generally has functionalities like switch onto fault, Power swing detection, Fuse failure, Broken conductor, Carried aided tripping, fault locator, Auto reclosure, Pole discordance etc. The basic protection philosophy of any protection scheme is that it has to operate for a fault within its protection zone and it should be absolutely stable for a fault outside its protected zone. In some scenarios the distance protection scheme can go for a mal-operation, i.e., distance protection scheme gets activated for no fault condition. One of such scenario is fuse failure occurrence in one bay with the broken conductor occurrence in another bay. If the broken conductor fault occurs in another bay, it creates an unbalance current. If the unbalance current goes more than a threshold, then fuse failure algorithm resets immediately. The impedance protection gets unblocked. Since the measured voltage is zero in that phase where fuse is failed, measured impedance by the impedance protection will also be zero. Here the impedance protection sees fault as close in fault in the conductor and it issues trip to the circuit breaker. This operation of distance protection scheme is referred here as mal-operation. Hence for no fault condition distance protection scheme will unnecessarily trip that line. If this is an important feeder which feeds various utilities like industries, commercial and Transportation etc., it creates interrupted power supply and results in huge loss for the utilities.

WO 2006/124743 A1 relates to a multiphase power system having a feeder and particularly a method for identifying loss of phase on the primary side due to a blown fuse on the secondary side of the feeder.

Yassef Y. et al describe a method for fault detection in a multifeed power supply system.

It is an object of the invention to manage the power bay in no fault condition case.

The object is achieved by a power bay protection device of claim 1 and a method to manage power bays within a power bay system according to claim 4.

According to an embodiment of the power bay protection device, the device receives fuse input based on a condition of a fuse for a power bay management device and an undercurrent input related to an undercurrent for one of power lines of the power bay. The power bay protection device processes the fuse input and the undercurrent input and detects a broken conductor in another power bay. On a basis of detection of a broken conductor in another power bay, the power bay protection device generates an instruction for blocking an implementation of impedance protection of the power bay by the power bay management device. This reduces the manual intervention and automatically blocks the implementation of impedance protection of the power bay.

According to another embodiment of the power bay protection device, wherein the instruction for blocking an implement tion of impedance protection of the power bay is a binary value. The power bay protection device also includes a trigger module which receives the fuse input based on fuse condition for the power bay management device and generates a trigger. The power bay protection device uses the trigger and the undercurrent input related to undercurrent and detects a broken conductor in another power bay. This makes implementation of blocking of the impedance protection simpler.

According to yet another embodiment of the power bay protection device, the power bay protection device receives a first input based on a unbalanced voltage in each of the power lines in the bay and a second input based on a unbalanced current flowing in each of the power lines in the bay, processes the first input and the second input and generates the fuse input based on a condition of a fuse for a power bay management device, if the first input is about presence of unbalanced voltage and the second input is about absence of unbalanced current. This provides for a bi-directional coupling between the power bay management device and the power bay protection device and reduces human intervention while detecting the broken conductor in another power bay.

The present invention is further described hereinafter with reference to illustrated embodiments shown in the accompanying drawings. The illustrated embodiments of the devices and the methods are intended to illustrate, but not limit the invention. The drawings contain the following figures in which:
- FIG. 1: schematically illustrates occurrence of a mal-operation condition in a power bay system;
- FIG. 2: schematically illustrates the power bay protection device coupled to a power bay management device;
- FIG. 3: schematically illustrates the power bay protection device using a trigger, and the power bay protection device coupled to the power bay management device;

Prior to explaining functioning of system through various embodiments, some of the terminology used herein will be explained.

"Power bay system" is a power station having various power bays connected through bus bars. These power substations are used as feeders to other substations or to the end users via power transmission mechanism.

"Power bay" is a part of the power bay system connected to other power bays through bus bars.

"Power line" is conductors carrying power in a power bay.

"Fuse" is a mechanism through which excessive flow of current is managed in a power bay. The fuse is connected between the volatage transformer secondary side and the Power bay protection device, so that whenever abnormal current is flowing, the fuse is blown off and fuse failure mechanism is activated in the power bay management device.

"Fuse failure" refers to a condition regarding blowing out of a fuse in a voltage transformer secondary circuit coupled to the power bay management device, certain measuring loops which measures voltage in a power bay may mistakenly identify voltage of zero, and which due to load current may result in an unwanted trip. Hence the impedance protection needs to be blocked whenever there is a fuse failure. Fuse failure is generally monitored by the presence of unbalance voltage and absence of unbalance current. If these two conditions get satisfied, the impedance protection is blocked and an alarm is issued to the operator that the fuse failure is detected. The fuse failure detection can work either based on zero sequence or negative sequence. It depends on the type of network solidly grounded or high impedance grounded. For solidly grounded system zero sequence will be used and for high impedance grounded system negative sequence will be used.

"Fuse input" can be a value, or a variable, a electrical signal or a mechanical signal or a combination or any other kind of input which is based on condition of fuse for a power bay management device.

"Broken conductor" refers to a fault in the power line of any of the bay in the power bay system. These faults will not cause an increase in phase current and hence cannot be detected by a normal overcurrent function. However they produce an unbalance current which will be monitored by this algorithm and it issues an alarm to the operator that broken conductor is detected.

"Power bay management device", "Power bay protection device" and "Triggering module" are generally processors which are logic circuitry that responds to and processes the basic instructions for performing a function. They may be a central processing unit of a personal computer adapted to perform the function or microprocessors which are multipurpose, programmable devices that accepts digital data as input, processes it according to instructions stored in its memory, and provides results as output or any other computing device adapted to perform functions of the power bay management device and/or the power bay protection device and/or triggering module according to current invention. However, technical difference between the power bay management device, the power bay protection device and the triggering module are explained through there functionalities while explaining the figures.

"Undercurrent" Current value below the nominal or rated value.

"Unbalanced current", "Unbalanced voltage" - A three-phase power system is called balanced or symmetrical if the three-phase voltages and currents have the same amplitude and are phase shifted by 120° with respect to each other. If either or both of these conditions are not met, then system is called unbalanced or asymmetrical.

"Instruction for blocking an implementation of impedance protection" can be a value, or a variable, a electrical signal or a mechanical signal or a combination thereof or any other kind of input which will be generated by the power bay protection device for blocking an implementation of impedance protection.

"Trigger" can be electronic information which is indicative of binary actions or a binary value or a combination thereof which is generated by the triggering module by using the fuse input.

"Undercurrent input" can be a value, or a variable, an electrical signal or a mechanical signal or a combination thereof relating to the undercurrent flowing through the power bay.

"First input" can be a value, or a variable, an electrical signal or a mechanical signal or a combination thereof based on a unbalanced voltage in each of the power lines in the bay

"Second input" can be a value, or a variable, an electrical signal or a mechanical signal or a combination thereof based on a unbalanced current flowing in each of the power lines in the power bay.

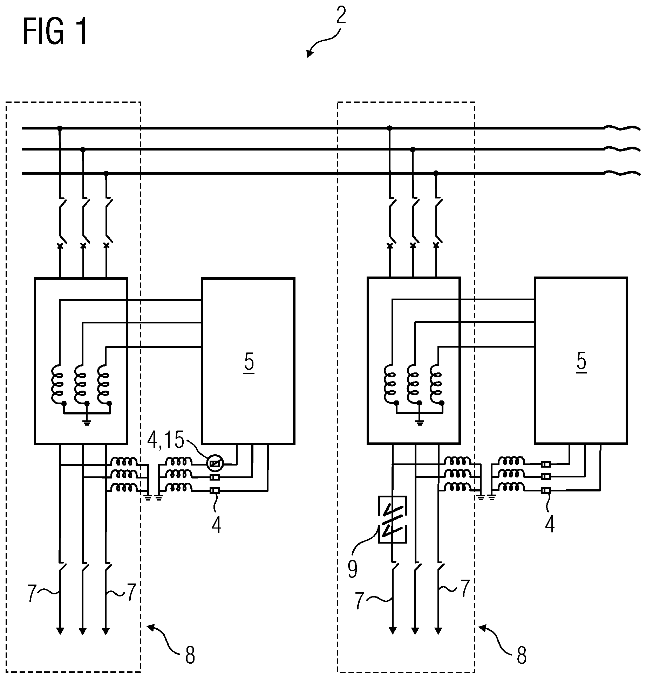

Initially, to understand the reasons for occurring of mal-operation conditions, the schematic illustration of power bay system is shown in FIG 1.

In the FIG 1, a power bay system 2 is shown where various power bays 8 are connected with single busbar arrangement. In one of the power bay 8 amongst 3 fuses 4, one of the fuses 4, 15 is blown out. There will be presence of an unbalance voltage and absence of an unbalance current. Fuse failure algorithm will immediately block the distance protection mechanism in a power bay management device 5 of the power bay 8 where the fuse 4, 15 is blown out. The power bay management device 5 generates an alarm to an operator. Until the operator attends the fuse failure and replaces the fuse 4, 15, the distance protection mechanism will be kept on applying to the power bay management device 5.

If another fault occurs before the operator replaces the fuse 4, 15, suddenly there will be rise in current and an unbalance current gets created and if it goes more than a threshold setting then again fuse failure gets detected automatically and the distance protection mechanism of the power bay management device 5 go for tripping.

Depicting the above mentioned situation in FIG 1, where operator is yet to replace the fuse 4, 15 (i.e., this power line 7 measures zero voltage) suddenly a broken conductor 9 occurs in any of the other power bay 8 which creates an unbalance current. If the unbalance current goes more than the threshold setting, then fuse failure condition gets reset which unblocks the impedance protection. Since the measured voltage is zero in the power line 7 where fuse 4, 15 is failed, measured impedance will also be zero. Here the impedance protection sees fault as close in fault in the conductor and it issues trip to the circuit breaker. This operation of distance protection scheme is referred here as mal-operation.

Hence for no fault condition distance protection of the power bay management device 5 will unnecessarily trip the power line 7. If this power bay system 2 is an important feeder which feeds various utilities like industries, commercial and Transportation etc., it creates interrupted power supply and results in huge loss for the utilities. Therefore mal-operation of the impedance scheme during above mentioned scenario should be prevented by means of some algorithm. The algorithm is explained in detail below.

While discussing 2 and 3 references will be made to FIG 1.

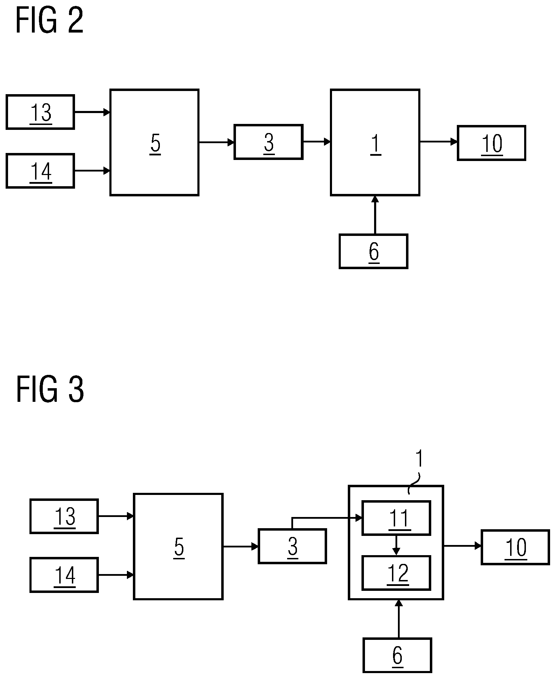

FIG 2 illustrates a schematic diagram of a coupling between the power bay management device 5 and a power bay protection device 1.

The power bay management device 5 receives a first input 13 based on a unbalanced voltage in each of the power lines 7 in the bay 8 and a second input 14 based on a unbalanced current flowing in each of power lines 7 in the bay 8, further processes the first input 13 and the second input 14 and generates a fuse input 3 based on a condition of the fuse 4, if the first input 13 is about presence of unbalanced voltage and the second input 14 is about absence of unbalanced current.

The power bay protection device 1 receives the fuse input 3 based on the condition of the fuse 4 from a power bay management device 5 and an undercurrent input 6 related to an undercurrent for one of power lines 7 of the power bay 8, processes the fuse input 3 based on fuse condition and the undercurrent input 6 to detect a broken conductor 9 in another power bay 8. Alternatively, the power bay protection device 1 need not receive the fuse input 3 based on the condition of the fuse 4 from a power bay management device 5, rather the fuse input information 3 can be manually fed by the operator into the power bay protection device 1.

On a basis of detection of the broken conductor 9 in another power bay 8, the power bay protection device 1 further generates an instruction 10 for blocking an implementation of impedance protection of the power bay 8 by the power bay management device 5. Alternatively, the power bay protection device 1 need not generate the instruction 10 for blocking an implementation of impedance protection of the power bay 8, rather the power bay protection device 1 only detects of the broken conductor 9 in another power bay 8 and alarms the operator who further triggering the blocking of an implementation of impedance protection of the power bay 8 by the power bay management device 5.

The power bay protection device 1 is coupled to the power bay management device 5 through an electrical coupling and/or data coupling, wherein the coupling is through external electrical and data connection. The external data connection includes the wireless data connections like Wi-Fi, Bluetooth, etc. In an alternate embodiment, the power bay protection device 1 can be a sub-part of the power bay management device 1 and the coupling through internal electrical connections and/or internal data connection, wherein the internal connections means the data and/or electrical connections within various modules of the power bay management device 5 and one of such module is the power bay protection device 1.

FIG 3 illustrates another embodiment of the coupling of between the power bay management device 5 and the power bay protection device 1. For convenience, only aspects which are in addition to the coupling of between the power bay management device 5 and the power bay protection device 1 of FIG 2, is explained here. In the embodiment of FIG 3, the power bay protection device 1 further includes a trigger module 11 which receives the fuse input 3 based on fuse condition of the fuse 4 and generates a trigger 12. The power bay protection device 1 uses the trigger 12 and the undercurrent input 6 to identify detection of a broken conductor 9 in another power bay 8. The power bay protection device 1 generates the information 10 for blocking the implementation of impedance protection of the power bay 8 is a binary value.

While this invention has been described in detail with reference to certain embodiments, it should be appreciated that the present invention is not limited to those precise embodiments. Rather, in view of the present disclosure which describes the current best mode for practicing the invention, many modifications and variations would present themselves, to those of skilled in the art without departing from the scope of this invention. The scope of the invention is, therefore, indicated by the following claims rather than by the foregoing description. All changes, modifications, and variations coming within the meaning and range of equivalency of the claims are to be considered within their scope.

## Claims

1. A power bay protection device (1) adapted to receive a fuse input (3) based on a condition of a fuse (4) for a power bay management device (5) and an undercurrent input (6) related to an undercurrent for one of power lines (7) of the power bay (8), to process the fuse input (3) based on fuse condition and the undercurrent input (6) to detect a broken conductor (9) in another power bay (8), wherein on a basis of detection of the broken conductor (9) in another power bay (8), the device (1) is further adapted to generate an instruction (10) for blocking an implementation of impedance protection of the power bay (8) by the power bay management device (5).

2. The device (1) according to claim 1, wherein the instruction (10) for blocking an implementation of impedance protection of the power bay (8) is a binary value, the power bay protection device (1) further comprising:
- a trigger module (11) adapted to receive the fuse input (3) based on fuse condition for the power bay management device (5) and to generate a trigger (12),
Wherein the power bay protection device (1) is adapted to use the trigger (12) and the undercurrent input (6) to detect a broken conductor (9) in another power bay (8).

3. The device (1) according to any of the claims 1 to 2, wherein the power bay management device (5) is adapted to receive a first input (13) based on a unbalanced voltage in each of the power lines in the bay (7) and a second input (14) based on a unbalanced current flowing in each of the power lines (7) in the bay (8), to process the first input (13) and the second input (14) and to generate the fuse input (3) based on a condition of a fuse (4), if the first input (13) is about presence of unbalanced voltage and the second input (14) is about absence of unbalanced current.

4. A method for protecting power bays comprising:
- receiving a fuse input (3) based on a condition of a fuse (4) for a power bay management device (5) and an undercurrent input (6) related to an undercurrent for one of power lines (7) of the power bay (8) by a power bay protection device (1), and
- processing the fuse input (3) based on fuse condition and the undercurrent input (6) and detecting a broken conductor (9) in another power bay (8) by the power bay protection device (1), wherein on a basis of detection of the broken conductor (9) in another power bay (8), generating an instruction (10) by the power bay protection device (1) for blocking an implementation of impedance protection of the power bay (8) by the power bay management device (5).

5. The method according to claim 4, wherein the instruction (10) for blocking an implementation of impedance protection of the power bay (8) is a binary value, the method further comprising:
- receiving the fuse input (3) based on fuse condition for the power bay management device (5) of the power bay protection device (1) and generating a trigger (12) by a trigger module (11),
- using the trigger (12) and the input (6) for detecting a broken conductor (9) in another power bay (8) by the power bay protection device (1).

6. The method according to any claims from 4 to 5 comprising:
- receiving a first input (13) based on a unbalanced voltage in each of the power lines (7) in the bay (8) and a second input (14) based on a unbalanced current flowing in each of the power lines (7) in the bay (8) by the power bay management device (5),
- processing the first input (13) and the second input (14) and generating the fuse input (3) by the power bay management device (5), if the first input (13) is about presence of unbalanced voltage and the second input (14) is about absence of unbalanced current.

## Patentansprüche

1. Stromstationsschutzvorrichtung (1), die angepasst ist, um eine Sicherungseingabe (3) auf Grundlage eines Zustands einer Sicherung (4) für eine Stromstationsverwaltungsvorrichtung (5) und eine Unterstromeingabe (6) im Zusammenhang mit einem Unterstrom für eine von Stromleitungen (7) der Stromstation (8) zu erhalten, um die Sicherungseingabe (3) auf Grundlage des Sicherungszustands und die Unterstromeingabe (6) zum Erfassen eines gebrochenen Leiters (9) in einer anderen Stromstation (8) zu verarbeiten, wobei auf Grundlage einer Erfassung des gebrochenen Leiters (9) in einer anderen Stromstation (8) die Vorrichtung (1) ferner angepasst ist, um eine Anweisung (10) zum Blockieren einer Implementierung eines Impedanzschutzes der Stromstation (8) durch die Stromstationsverwaltungsvorrichtung (5) zu erzeugen.

2. Vorrichtung (1) nach Anspruch 1, wobei die Anweisung (10) zum Blockieren einer Implementierung eines Impedanzschutzes der Stromstation (8) ein binärer Wert ist, wobei die Stromstationsschutzvorrichtung (1) ferner Folgendes umfasst:
- ein Auslösungsmodul (11), das angepasst ist, um die Sicherungseingabe (3) auf Grundlage des Sicherungszustands für die Stromstationsverwaltungsvorrichtung (5) zu erhalten und einen Auslösungsimpuls (12) zu erzeugen,
wobei die Stromstationsschutzvorrichtung (1) angepasst ist, um den Auslösungsimpuls (12) und die Unterstromeingabe (6) zu verwenden, um einen gebrochenen Leiter (9) in einer anderen Stromstation (8) zu erfassen.

3. Vorrichtung (1) nach einem der Ansprüche 1 bis 2, wobei die Stromstationsverwaltungsvorrichtung (5) angepasst ist, um eine erste Eingabe (13) auf Grundlage einer unausgeglichenen Spannung in jeder der Stromleitungen in der Station (7) und eine zweite Eingabe (14) auf Grundlage eines unausgeglichenen Stroms, der in jeder der Stromleitungen (7) in der Station (8) fließt, zu erhalten, um die erste Eingabe (13) und die zweite Eingabe (14) zu verarbeiten und die Sicherungseingabe (3) auf Grundlage eines Zustands einer Sicherung (4) zu erzeugen, wenn die erste Eingabe (13) die Anwesenheit einer unausgeglichenen Spannung betrifft und die zweite Eingabe (14) die Abwesenheit eines unausgeglichenen Stroms betrifft.

4. Verfahren zum Schützen von Stromstationen, umfassend:
- Erhalten einer Sicherungseingabe (3) auf Grundlage eines Zustands einer Sicherung (4) für eine Stromstationsverwaltungsvorrichtung (5) und einer Unterstromeingabe (6) im Zusammenhang mit einem Unterstrom für eine von Stromleitungen (7) der Stromstation (8) durch eine Stromstationsschutzvorrichtung (1); und
- Verarbeiten der Sicherungseingabe (3) auf Grundlage des Sicherungszustands und der Unterstromeingabe (6) und Erfassen eines gebrochenen Leiters (9) in einer anderen Stromstation (8) durch die Stromstationsschutzvorrichtung (1), wobei auf Grundlage einer Erfassung des gebrochenen Leiters (9) in einer anderen Stromstation (8) eine Anweisung (10) durch die Stromstationsschutzvorrichtung (1) zum Blockieren einer Implementierung eines Impedanzschutzes der Stromstation (8) durch die Stromstationsverwaltungsvorrichtung (5) erzeugt wird.

5. Verfahren nach Anspruch 4, wobei die Anweisung (10) zum Blockieren einer Implementierung eines Impedanzschutzes der Stromstation (8) ein binärer Wert ist, wobei das Verfahren ferner Folgendes umfasst:
- Erhalten der Sicherungseingabe (3) auf Grundlage des Sicherungszustands für die Stromstationsverwaltungsvorrichtung (5) der Stromstationsschutzvorrichtung (1) und Erzeugen eines Auslösungsimpulses (12) durch ein Auslösungsmodul (11),
- Verwenden des Auslösungsimpulses (12) und der Eingabe (6) zum Erfassen eines gebrochenen Leiters (9) in einer anderen Stromstation (8) durch die Stromstationsschutzvorrichtung (1).

6. Verfahren nach einem der Ansprüche 4 bis 5, umfassend:
- Erhalten einer ersten Eingabe (13) auf Grundlage einer unausgeglichenen Spannung in jeder der Stromleitungen (7) in der Station (8) und einer zweiten Eingabe (14) auf Grundlage eines unausgeglichenen Stroms, der in jeder der Stromleitungen (7) in der Station (8) fließt, durch die Stromstationsverwaltungsvorrichtung (5),
- Verarbeiten der ersten Eingabe (13) und der zweiten Eingabe (14) und Erzeugen der Sicherungseingabe (3) durch die Stromstationsverwaltungsvorrichtung (5), wenn die erste Eingabe (13) die Anwesenheit einer unausgeglichenen Spannung betrifft und die zweite Eingabe (14) die Abwesenheit eines unausgeglichenen Stroms betrifft.

## Revendications

1. Dispositif de protection d'armoires électriques (1) adapté pour recevoir une entrée de fusible (3) basée sur un état d'un fusible (4) d'un dispositif de gestion d'armoires électriques (5) et une entrée de sous-intensité (6) relative à une sous-intensité de l'une de lignes électriques (7) de l'armoire électrique (8), pour traiter l'entrée de fusible (3) basée sur l'état du fusible et l'entrée de sous-intensité (6) pour détecter un conducteur rompu (9) dans une autre armoire électrique (8),
dans lequel en fonction de la détection du conducteur rompu (9) dans une autre armoire électrique (8), le dispositif (1) est adapté en outre pour générer une instruction (10) de blocage d'une mise en oeuvre d'une protection d'impédance de l'armoire électrique (8) par le dispositif de gestion d'armoires électriques (5).

2. Dispositif (1) selon la revendication 1, dans lequel l'instruction (10) de blocage d'une mise en oeuvre d'une protection d'impédance de l'armoire électrique (8) est une valeur binaire, le dispositif de protection d'armoires électriques (1) comprenant en outre :
- un module déclencheur (11) adapté pour recevoir l'entrée de fusible (3) en fonction de l'état du fusible du dispositif de gestion d'armoires électriques (5) et générer un déclenchement (12), le dispositif de protection d'armoires électriques (1) étant adapté pour utiliser le déclenchement (12) et l'entrée de sous-intensité (6) pour détecter un conducteur rompu (9) dans une autre armoire électrique (8).

3. Dispositif (1) selon l'une quelconque des revendications 1 à 2, dans lequel le dispositif de gestion d'armoires électriques (5) est adapté pour recevoir une première entrée (13) basée sur une tension déséquilibrée dans chacune des lignes électriques dans l'armoire (7) et une seconde entrée (14) basée sur un courant déséquilibré passant dans chacune des lignes électriques (7) dans l'armoire (8), traiter la première entrée (13) et la seconde entrée (14) et générer l'entrée de fusible (3) d'après un état d'un fusible (4), si la première entrée (13) se rapporte à la présence d'une tension déséquilibrée et la seconde entrée (14) se rapporte à l'absence d'un courant déséquilibré.

4. Procédé de protection d'armoires électriques comprenant :
- la réception d'une entrée de fusible (3) basée sur un état d'un fusible (4) d'un dispositif de gestion d'armoires électriques (5) et d'une entrée de sous-intensité (6) relative à une sous-intensité de l'une de lignes électriques (7) de l'armoire électrique (8) par un dispositif de protection d'armoires électriques (1), et
- le traitement de l'entrée de fusible (3) basée sur l'état du fusible et de l'entrée de sous-intensité (6) et la détection d'un conducteur rompu (9) dans une autre armoire électrique (8) par le dispositif de protection d'armoires électriques (1), dans lequel en fonction de la détection du conducteur rompu (9) dans une autre armoire électrique (8), une instruction (10) de blocage d'une mise en oeuvre d'une protection d'impédance de l'armoire électrique (8) par le dispositif de gestion d'armoires électriques (5) est générée par le dispositif de protection d'armoires électriques (1).

5. Procédé selon la revendication 4, dans lequel l'instruction (10) de blocage d'une mise en oeuvre d'une protection d'impédance de l'armoire électrique (8) est une valeur binaire, le procédé comprenant :
- la réception de l'entrée de fusible (3) en fonction de l'état du fusible du dispositif de gestion d'armoires électriques (5) du dispositif de protection d'armoires électriques (1) et la génération d'un déclenchement (12) par un module déclencheur (11),
- l'utilisation du déclenchement (12) et de l'entrée (6) pour détecter un conducteur rompu (9) dans une autre armoire électrique (8) par le dispositif de protection d'armoires électriques (1).

6. Procédé (1) selon l'une quelconque des revendications 4 à 5, comprenant :
- la réception d'une première entrée (13) basée sur une tension déséquilibrée dans chacune des lignes électriques (7) dans l'armoire (8) et d'une seconde entrée (14) basée sur un courant déséquilibré passant dans chacune des lignes électriques (7) dans l'armoire (8) par le dispositif de gestion d'armoires électriques (5),
- le traitement de la première entrée (13) et de la seconde entrée (14) et la génération de l'entrée de fusible (3) par le dispositif de gestion d'armoires électriques (5), si la première entrée (13) se rapporte à la présence d'une tension déséquilibrée et la seconde entrée (14) se rapporte à l'absence d'un courant déséquilibré.
